(19) Europäisches Patentamt
European Patent Office
Office européen des brevets

(11) **EP 4 732 986 A1**

(12) **EUROPEAN PATENT APPLICATION**
published in accordance with Art. 153(4) EPC

(43) Date of publication:
**29.04.2026 Bulletin 2026/18**

(21) Application number: **24872061.7**

(22) Date of filing: **20.09.2024**

(51) International Patent Classification (IPC):
**B23K 26/21** $^{(2014.01)}$       **B23K 26/342** $^{(2014.01)}$

(52) Cooperative Patent Classification (CPC):
**B23K 26/21; B23K 26/342**

(86) International application number:
**PCT/JP2024/033591**

(87) International publication number:
**WO 2025/070270 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023   JP 2023166487**

(71) Applicant: **JFE Steel Corporation
Tokyo, 100-0011 (JP)**

(72) Inventors:
• **TOMITA, Kai
Tokyo 100-0011 (JP)**
• **TANIGUCHI, Koichi
Tokyo 100-0011 (JP)**
• **TSUKAMOTO, Kengo
Tokyo 100-0011 (JP)**
• **HARADA, Yoshimitsu
Tokyo 100-0011 (JP)**
• **NUMAZAWA, Yoshinori
Tokyo 100-0011 (JP)**
• **FUJITA, Noriki
Tokyo 100-0011 (JP)**

(74) Representative: **Hoffmann Eitle
Patent- und Rechtsanwälte PartmbB
Arabellastraße 30
81925 München (DE)**

(54) **BUTT WELDING METHOD**

(57)     Provided is a butt welding method capable of, even if weld metal is soft as in the case of a welded portion formed when a high-Ni austenitic or low-carbon ferritic filler wire is used, strengthening the weld metal and preventing fracture at the welded portion during sheet passage through a continuous processing line. Upon butting a trailing end of a preceding steel sheet and a leading end of a succeeding steel sheet at an entry side of the processing line and pressing a solidified welded portion at a butted portion, an excess weld metal height h [mm] of the welded portion satisfies h > 0, and a reduction ratio during the pressing is controlled to satisfy $0 \leq H_w - H_1 < 100$, where $H_w$ is hardness of the welded portion after the pressing and $H_1$ is base metal hardness of a lower-hardness steel sheet among the butted steel sheets.

FIG. 1

**Description**

TECHNICAL FIELD

The present disclosure relates to a butt welding method of, when passing steel sheets through various processing lines, butting the trailing end of a preceding steel sheet and the leading end of a succeeding steel sheet at the entry side of the processing line and welding the steel sheets by laser welding.

BACKGROUND

In recent years, in the steel industry, it has been common practice for hot rolling lines, pickling lines, cold rolling lines, annealing lines, etc. for producing steel sheets to continuously process steel sheets while uncoiling the steel sheets that have been coiled.

Thus, in production lines for continuously processing steel sheets, the trailing end of a preceding steel sheet and the leading end of a succeeding steel sheet are butted and welded at the entry side of the line in order to continuously pass steel sheets to be processed through the line.

Flash-butt welding or laser welding is often used for such welding of steel sheets. In particular, laser welding is often used for welding of hard steel sheets with low toughness, such as electrical steel sheets and high-strength steel sheets.

With laser welding, however, the welded portion is rapidly cooled after welding, resulting in hardening and thus making it difficult to ensure sufficient toughness. In particular, for steel sheets containing a large amount of C or Si, the brittleness of the welded portion is more noticeable when the content of C or Si is higher.

Therefore, the welded portion resulting from laser-welding steel sheets containing a large amount of C or Si is prone to fracture during sheet passage through a continuous processing line. When steel sheets fracture during sheet passage through the line, recovery takes a long time, causing significant reduction in the ratio of utilization and productivity.

Moreover, for example in rolling mills, the rolls may be damaged, requiring roll replacement. This not only decreases productivity but also increases maintenance costs.

Accordingly, filler wires with a low alloy content have conventionally been used for welding steel sheets with a high alloy content. For example, low-carbon ferritic filler wires or high-Ni austenitic filler wires, such as YGW12Y (C: approximately 0.08 mass%, Si: approximately 0.5 mass%) specified in JIS Z 3312 (2009) or SNI6625 (Si: approximately 0.29 mass%, Ni: approximately 61.3 mass%) specified in JIS Z 3334 (2017), have been supplied.

Such filler wires are intended to dilute the concentrations of C and Si in the weld metal, thereby suppressing the formation of coarse ferrite microstructure or brittle martensite microstructure and preventing embrittlement of the weld metal.

However, if the foregoing high-Ni austenitic or low-carbon ferritic filler wire is used, the weld metal tends to become softer than the steel sheets. In such a case, deformation concentrates in the weld metal during sheet passage through a continuous processing line, causing fracture at the welded portion.

In view of this, Patent Literature (PTL) 1 proposes a technique that, during butt welding while supplying a filler wire, presses the excess weld metal of the weld bead after welding and controls the microstructure of the weld metal formed, thereby obtaining a welded joint with weld metal excellent in toughness.

PTL 2 proposes a technique that uses a pressing device such as a press when pressing the weld bead after welding.

CITATION LIST

Patent Literature

PTL 1: JP 4486639 B2
PTL 2: JP 2948843 B2

SUMMARY

(Technical Problem)

The technique described in PTL 1 presses the laser welded portion in the temperature range of $Ac_1$ to $Ac_3$ to refine the austenite grain size, thus promoting transformation to ferrite and pearlite and reducing brittle martensite.

Hence, this technique cannot be used for strengthening weld metal that does not undergo phase transformation, such as ferrite single phase or austenite single phase. Even for weld metal that undergoes phase transformation, if there is a concentration distribution of chemical composition in the weld metal, the above-mentioned transformation does not necessarily result in high strength throughout the entire weld metal.

The technique described in PTL 2 removes irregularities in the weld bead to relieve stress concentration in the welded portion and prevent fracture at the welded portion during sheet passage through a continuous processing line. However, if there is a strength difference between the welded portion and the base metal as in the case of a welded portion formed when a high-Ni austenitic or low-carbon ferritic filler wire is used, fracture may occur at the welded portion.

It could therefore be helpful to provide a butt welding method capable of, even if weld metal is soft as in the case of a welded portion formed when a high-Ni austenitic or low-carbon ferritic filler wire is used, increasing the strength of the weld metal and preventing fracture at the welded portion during sheet passage through a continuous processing line.

(Solution to Problem)

Upon careful examination, we discovered that, by pressing the weld bead at an appropriate reduction ratio depending on the gap at the butted portion between steel sheets (hereinafter referred to as "butt gap") and the thickness of the weld bead after welding (hereinafter referred to as "excess weld metal height"), the strength of the weld metal can be increased and fracture at the welded portion in a continuous processing line can be suppressed.

We consider that the strength of the weld metal is increased by the following mechanism.

As a result of the weld metal formed by laser welding being pressed under appropriate conditions, processing strain is introduced into the pressed portion, and the strength of the weld metal increases. Regarding the strength difference between the weld metal and the steel sheets, if the butt gap is small, the dilution ratio of the weld metal by the base steel sheets (i.e., the proportion of the base metal composition in the weld metal) is high, and the composition of the weld metal is close to that of the steel sheets, therefore the strength difference is likely to be small. On the other hand, if the butt gap is large, the dilution ratio of the weld metal by the base steel sheets is low, and the composition of the weld metal is close to that of the filler wire, therefore the strength difference is likely to be large.

Therefore, in order to resolve the strength difference, the reduction ratio for pressing needs to be higher when the butt gap is larger.

When the excess weld metal height is larger, the cross-sectional shape of the weld bead is more gently convex. In such a case, even with the same reduction ratio, a larger volume is pressed as compared with the case where the excess weld metal height is small. As a result, the processing strain introduced into the pressed portion is larger. If the excess weld metal height is small, on the other hand, a higher reduction ratio is required to obtain certain processing strain.

The present disclosure is based on these discoveries. We thus provide:

1. A butt welding method comprising, upon continuously passing a plurality of steel sheets through a processing line, butting a trailing end of a preceding steel sheet and a leading end of a succeeding steel sheet at an entry side of the processing line, then irradiating a butted portion with a laser while supplying a filler wire to the butted portion so as to weld the steel sheets by melting and solidifying the filler wire and, and pressing a solidified welded portion, wherein an excess weld metal height h [mm] of the welded portion formed by the irradiation with the laser satisfies h > 0, and a reduction ratio during the pressing is controlled to satisfy a relationship of $0 \leq H_w - H_1 < 100$, where $H_w$ is hardness of the welded portion after the pressing and $H_1$ is base metal hardness of a steel sheet having lower hardness among the butted steel sheets.

2. The butt welding method according to 1., wherein the reduction ratio R [%] during the pressing satisfies any of the following formulas (1) to (6) depending on a butt gap G [mm] of the butted portion and the excess weld metal height h [mm]:

in the case where the excess weld metal height h satisfies $0 < h \leq 0.4$ mm, when

$$0 \leq G < 0.20,$$

$$(0.05G + 0.06)/(0.1h) \leq R < (1.0G + 0.5)/(0.1h) \qquad (1)$$

when

$$0.20 \leq G < 0.50,$$

$$(0.1G + 0.1)/(0.2h) \leq R < (0.7G + 1.3)/(0.2h) \qquad (2)$$

when

$$0.50 \leq G,$$

$$(0.2G + 0.2)/(0.4h) \leq R < (0.5G + 3.0)/(0.4h) \qquad (3);$$

and

in the case where the excess weld metal height h satisfies h > 0.4 mm,
when

$$0 \leq G < 0.20,$$

$$(0.05G + 0.06)/(0.1h) \leq R < (40G + 220)/(10 + h) \qquad (4)$$

when

$$0.20 \leq G < 0.50,$$

$$(0.1G + 0.1)/(0.2h) \leq R < (20G + 330)/(15 + h) \qquad (5)$$

when

$$0.50 \leq G,$$

$$(0.2G + 0.2)/(0.4h) \leq R < (10G + 450)/(20 + h) \qquad (6).$$

3. The butt welding method according to 1. or 2., wherein one or both of a ferritic filler wire and an austenitic filler wire are used as the filler wire.

(Advantageous Effect)

It is thus possible to provide a butt welding method capable of, even if weld metal is soft, increasing the strength of the weld metal and preventing fracture at the welded portion during sheet passage through a continuous processing line.

BRIEF DESCRIPTION OF THE DRAWINGS

In the accompanying drawings:

FIG. 1 is a schematic diagram illustrating a laser welding method and a pressing method;
FIG. 2 is a schematic diagram illustrating a weld bead before rolling; and
FIG. 3 is a schematic diagram illustrating hardness measurement points in hardness evaluation for a welded portion.

DETAILED DESCRIPTION

Embodiments of the present disclosure will be described below. The present disclosure is, however, not limited to the following embodiments. In this specification, each numeric value range expressed in the form of "A to B" denotes the range that includes values A and B as its lower and upper limits.

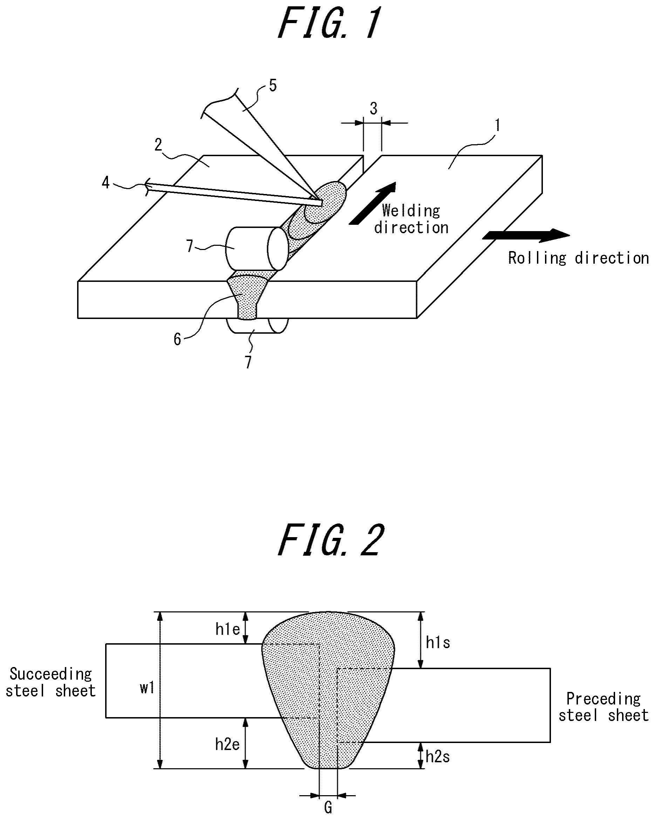

The present disclosure relates to a technique for butt-welded member production. As illustrated in FIG. 1, in butt-welded member production, when passing steel sheets through a continuous processing line, the trailing end of a preceding steel sheet 1 and the leading end of a succeeding steel sheet 2 are butted at the entry side of the line, the butted portion 3 is irradiated with a laser 5 while being supplied with a filler wire 4 to melt the steel sheets 1 and 2 and the filler wire 4 at the butted portion 3 and weld the steel sheets, and then an excess weld metal 6 of the solidified weld bead formed as a result of welding is pressed.

First, the welding device and the like used to implement the present disclosure will be described.

The type of laser used for welding in the present disclosure is not particularly limited, and a fiber laser, disk laser, semiconductor laser, $CO_2$ laser, or the like may be used. The composition and diameter of the filler wire are not particularly limited. However, from the viewpoint of preventing embrittlement of the weld metal forming the excess weld metal 6, for example, the composition is preferably a ferritic type with low C and Si content or an austenitic type with high Ni content. The type and installation method of shielding gas are not particularly limited, but it is preferable to use He gas in the case of a $CO_2$ laser. This is because He gas has a higher ionization voltage and is less likely to generate plasma than Ar gas.

The pressing means for the welded portion composed of the weld bead is not particularly limited as long as it can satisfy the below-described conditions. As an example, it is preferable to arrange rolls (hereinafter also referred to as "flattening rolls") for flattening the welded portion, such as pressing rolls 7 illustrated in FIG. 1, so as to face the front and back surfaces of the welded portion, and press the excess weld metal 6 of the weld bead from the upper and lower surfaces of the steel sheets with rotating the flattening rolls in the welding direction.

The steel sheets used in the present disclosure may be either hot-rolled steel sheets or cold-rolled steel sheets, but preferably contain 0.5 mass% or more of Si. To achieve the effects according to the present disclosure more advantageously, it is preferable to use steel sheets containing 2.5 mass% or more of Si, for which fracture at the welded portion is significant. Although no upper limit is placed on the Si content, the Si content is preferably 4.5 mass% or less from the viewpoint of ensuring cold rollability.

The steel sheets used in the present disclosure may contain 0.010 mass% or more of C. Since an increase in C content makes fracture at the welded portion more significant, the C content is more preferably 0.100 mass% or more. Although no upper limit is placed on the C content, the C content is preferably 0.500 mass% or less.

The steel sheets may contain either Si or C, or both Si and C.

The other components (including inevitable impurities) of the steel sheets used in the present disclosure are not particularly limited, and any components of steel sheets to be passed through the below-described continuous processing line and their amounts can be suitably used.

The steel sheets used in the present disclosure preferably have a sheet thickness in the range of 0.8 mm to 6.0 mm. If the sheet thickness is less than 0.8 mm, the amount of the steel sheets melted is small, so that the welded portion may burn through, making it difficult to form a weld bead. If the sheet thickness is more than 6.0 mm, in order to melt the steel sheets through to the back surface, it is necessary to increase the laser power or reduce the welding speed to increase heat input. This may cause a decrease in the toughness of the heat-affected zone (HAZ).

In the present disclosure, the term "processing line" refers to a line for continuously processing the steel sheets described above. In detail, the present disclosure is preferably applied to a continuous processing line where the trailing end of a preceding steel sheet and the leading end of a succeeding steel sheet are laser-welded at the entry side of the line and the welded steel sheets are passed through the line, such as a hot rolling line, pickling line, cold rolling line, cleaning line, continuous annealing line, temper rolling line, and finishing line. In the present disclosure, the term "continuous processing line" includes cases where an operator manually places steel sheets one by one, as long as the trailing end of a preceding steel sheet and the leading end of a succeeding steel sheet are laser-welded at the entry side of the line and the welded steel sheets are passed through the line.

The welding method according to the present disclosure comprises: performing butt welding by laser welding; monitoring the excess weld metal height of the weld bead formed by the laser welding; and applying pressure to the welded portion, formed as a result of the laser welding, depending on the excess weld metal height.

Here, if a low-alloy ferritic or high-Ni austenitic filler wire is supplied, the weld metal becomes soft and the strength of the weld metal is likely to decrease excessively as compared with the steel sheets, as mentioned above.

The strength of the weld metal is greatly influenced by the dilution ratio by the base metal. When the butt gap is larger, the dilution ratio by the base metal is lower, and the composition of the welded portion is closer to that of the filler wire, so that the strength of the weld metal is likely to be lower. Moreover, when the excess weld metal height is larger, the cross-sectional shape of the weld bead is more gently convex. In such a case, even with the same reduction ratio, a larger volume is pressed as compared with the case where the excess weld metal height is small. As a result, the processing strain introduced into the pressed portion is likely to be larger.

Hence, in the present disclosure, it is necessary to adjust the reduction ratio depending on the butt gap and the excess weld metal height in order to improve the strength of the weld metal to be higher than or equal to that of the steel sheets.

In detail, in order to improve the strength of the weld metal, the reduction ratio needs to be controlled (adjusted) so as to satisfy the relationship of $0 \leq H_w - H_1 < 100$, where $H_w$ is the hardness of the welded portion after pressing and $H_1$ is the base metal hardness of the steel sheet having the lower hardness among the butted steel sheets.

In the butt welding method according to the present disclosure, when the butt gap is denoted as G [mm], the excess weld metal height as h [mm], and the reduction ratio of the welded portion as R [%], the reduction ratio R satisfies any of the following formulas (1) to (6) depending on the butt gap G.

In the case where the excess weld metal height h satisfies 0 < h ≤ 0.4 mm,

when

$$0 \leq G < 0.20,$$

$$(0.05G + 0.06)/(0.1h) \leq R < (1.0G + 0.5)/(0.1h) \qquad (1)$$

when

$$0.20 \leq G < 0.50,$$

$$(0.1G + 0.1)/(0.2h) \leq R < (0.7G + 1.3)/(0.2h) \qquad (2)$$

when

$$0.50 \leq G,$$

$$(0.2G + 0.2)/(0.4h) \leq R < (0.5G + 3.0)/(0.4h) \qquad (3)$$

**In** the case where the excess weld metal height h satisfies h > 0.4 mm,

when

$$0 \leq G < 0.20,$$

$$(0.05G + 0.06)/(0.1h) \leq R < (40G + 220)/(10 + h) \qquad (4)$$

when

$$0.20 \leq G < 0.50,$$

$$(0.1G + 0.1)/(0.2h) \leq R < (20G + 330)/(15 + h) \qquad (5)$$

when

$$0.50 \leq G,$$

$$(0.2G + 0.2)/(0.4h) \leq R < (10G + 450)/(20 + h) \qquad (6)$$

Here, the reduction ratio R is a value calculated as (w1 - w2)/w1 × 100, where w1 [mm] is the thickness of the weld bead before rolling and w2 [mm] is the thickness of the weld bead after rolling in a cross-section of the welded portion perpendicular to the welding direction.

If the reduction ratio R is below the lower limit of any of formulas (1) to (6), hardening of the welded portion by pressing is insufficient. If the reduction ratio R exceeds the upper limit of any of formulas (1) to (6), the welded portion hardens excessively.

In formulas (1) to (6), for example, in the case where the base metal is ferritic steel and the wire is a nickel alloy, the microstructure of the weld metal tends to be as follows: a α single-phase microstructure when 0 ≤ G < 0.20; a microstructure of α phase, y phase, or a mixture of both depending on welding conditions when 0.20 ≤ G < 0.50; and a y single-phase microstructure when 0.50 ≤ G.

The butt gap G is the size of the gap that occurs when the trailing end of the preceding steel sheet and the leading end of the succeeding steel sheet are butted, and is measured by a sensor or the like before welding. As the sensor, for example, a laser displacement meter may be used. As the butt gap G increases, the dilution in the weld metal by the base metal decreases, and accordingly the composition of the filler wire predominates. This causes the strength of the weld metal to be lower than that of the steel sheets.

It is therefore necessary to increase the reduction ratio R and thus increase the processing strain introduced into the weld metal as the butt gap G increases.

The butt gap G [mm] is preferably 0 or more and 2.00 or less, because burn through tends to occur if the butt gap G [mm] is more than 2.00.

The excess weld metal height h [mm] is the sum (h1 + h2) of the height h1 [mm] of the excess weld metal protruding upward from the thin sheet surface and the height h2 [mm] of the excess weld metal protruding downward from the thin sheet surface in a cross-section of the welded portion perpendicular to the welding direction as illustrated in FIG. 2, and is measured using a shape measurement sensor such as a laser displacement meter, or a micrometer. In FIG. 2, h1 = (h1s + h1e)/2 and h2 = (h2s + h2e)/2 (h1s, h1e, h2s, h2e: unit [mm]).

As the excess weld metal height increases, the cross-sectional shape of the weld bead becomes a gently convex shape. In such a case, even with the same reduction ratio, a larger volume is pressed as compared with the case where the excess weld metal height is small. Thus, appropriate processing strain can be introduced with a low reduction ratio. Here, as the excess weld metal height increases, the reduction ratio for pressing the excess weld metal of the weld bead to the thickness of the base metal increases. Accordingly, the appropriate range of the reduction ratio R becomes broader as in formulas (1) to (6).

In the present disclosure, it is necessary that the excess weld metal height h of the welded portion formed by laser irradiation before pressing satisfies h > 0 (i.e., there exists so-called an excess weld metal).

This is because if the above relationship is not satisfied when pressing the welded portion, it is physically impossible for the weld metal to be pressed within the range according to the present disclosure. Such a condition (i.e., there is an excess weld metal) is typically applied in butt welding.

Since excessive pressing reduces the thickness of the base metal, the average thickness of the welded portion after pressing is preferably greater than or equal to the maximum thickness of the butted steel sheets.

In the present disclosure, the measurement procedure using a laser displacement meter employs a reflective type light-receiving method. The excess weld metal height h is preferably 0.1 mm to 2.0 mm, and more preferably 0.1 mm to 1.0 mm.

In the present disclosure, pressing after laser welding needs to be carried out in a state in which the welded portion is solidified. If the welded portion is at a temperature higher than or equal to the recrystallization temperature before solidification, dislocations due to processing are less likely to accumulate, and strain hardenability decreases. Therefore, the time from the end of laser irradiation to the start of pressing is, although not particularly limited, preferably 0.1 seconds or more.

In the butt welding method according to the present disclosure, any items not described in this specification may be in accordance with conventional methods.

EXAMPLES

Examples of the present disclosure will be described below.

For each of the steel sheets shown in Table 1, two steel sheets were butt-welded by a laser welder and a pressing device installed at the entrance of a line for continuously processing the steel sheets. Specifically, butt welding was performed under the welding conditions and pressing conditions shown in Table 1, to obtain a butt-welded member for each of the steel sheets shown in Table 1.

For laser welding, a disk laser with a wavelength of 1030 nm was used. As the filler wire, WEL® MIG625 (WEL is a registered trademark in Japan, other countries, or both) produced by Nippon Welding Rod Co., Ltd. and having a wire diameter of 0.9 mm was used.

The pressing device was arranged with flattening rolls facing the front and back surfaces of the welded portion formed by laser welding, and the welded portion was pressed while rotating the flattening rolls in the welding direction.

For the butt gap G, the gap between the preceding steel sheet and the succeeding steel sheet was measured using a laser displacement meter before welding. In detail, the butt gap G was determined by measuring the foregoing gap using the laser displacement meter in the above-described manner and taking the average in the range excluding regions from both transverse (i.e., width direction) ends of the steel sheets to 20 mm each toward the transverse center (i.e., inward). Specifically, the average of three points, namely, the positions 20 mm inward from both transverse ends of the steel sheets and the position at the center in the welding length direction, was taken. The reason for excluding the 20 mm regions inward from both transverse ends of the steel sheets is that the 20 mm regions from both transverse ends of the steel sheets correspond to the start and end points of the welded portion after welding, which are non-steady parts and may be removed in the production line.

For the excess weld metal height h, the height h1 of the excess weld metal protruding from the upper sheet surface and the height h2 of the excess weld metal protruding from the lower sheet surface as illustrated in FIG. 2 were measured using a laser displacement meter and added together. Each of h1 and h2 is a value obtained by measuring the respective distances from the maximum value at the measurement points to the surfaces of the preceding and succeeding steel sheets and taking the average of the two distances. In other words, in FIG. 2, h1 = (h1s + h1e)/2 and h2 = (h2s + h2e)/2, as mentioned above.

Here, the excess weld metal height was determined by performing measurements using the laser displacement meter in the above-described manner and taking the average in the range excluding 20 mm regions from the start and end points of the welded portion toward the center (i.e., inward). Specifically, the average of three points, namely, the positions 20 mm inward from both transverse ends of the steel sheets and the position at the center in the welding length direction, was taken. The reason for excluding the 20 mm regions inward from the start and end points of the welded portion is that the start and end parts of the welded portion are non-steady parts and may be removed in the production line.

In the present disclosure, the reduction ratio was determined by calculating the rate of change using the excess weld metal heights before and after pressing obtained by the foregoing method, as mentioned above.

The average thickness $t_w$ of the welded portion before pressing was determined by measuring the thickness of the welded portion using the laser displacement meter and taking the average of the thickness in the range excluding 20 mm regions from the start and end points of the welded portion toward the center (i.e., inward). Specifically, the average of three points, namely, the positions 20 mm inward from both transverse ends of the steel sheets and the position at the center in the welding length direction, was taken.

The welded portions obtained in this manner were each subjected to the following evaluations.

<Evaluation of Hardness of Welded Portion>

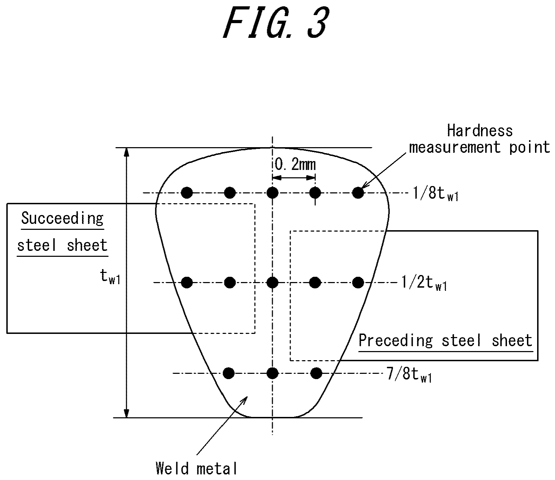

As illustrated in FIG. 3, the welded portion was cut in a direction perpendicular to the welding direction. The Vickers hardness HV0.2(10) in the weld metal at each of positions $1/8t_{w1}$, $1/2t_{w1}$, and $7/8t_{w1}$ where $t_{w1}$ is the maximum welded portion thickness was measured at 0.2 mm intervals from the center of the cross-section to both sides, and the average of all measurements was taken to be the hardness $H_w$ of the welded portion after pressing. For the hardness of the base metal, at a location 10 mm away from the boundary between the base metal and the molten metal, the Vickers hardness HV0.2(10) was measured at one point each at each of positions 1/8T, 1/2T, and 7/8T in the sheet thickness direction where T is the steel sheet thickness, and the average of the three points was calculated and the lower value among the butted steel sheets was taken as $H_1$. In Examples according to the present disclosure, $H_w - H_1$ was 0 or more and less than 100. In Comparative Examples, $H_w - H_1$ was outside this range. For welded portions produced under the same welding conditions, HV0.2(10) was measured at each position in the same manner as above, and the average of all measurements was taken to be the hardness Hs of the welded portion before pressing.

<Sheet Passage Test>

Each weld bead was passed through a cold rolling mill with a rolling tension of 150 MPa and a reduction ratio relative to the steel sheet thickness of 50 %. The sample was evaluated as pass (○) if it did not fracture at the weld metal, and evaluated as fail (×) if it fractured at the weld metal.

The evaluation results are shown alongside the welding conditions in Table 1.

[Table 1]

Table 1

| Test No. | Steel sheet | | | | Butt welding conditions | | | | | | | Evaluation of hardness of welded portion | | | | Sheet passage test | Remarks |
|---|---|---|---|---|---|---|---|---|---|---|---|---|---|---|---|---|---|
| | Si content [mass%] | C content [mass%] | Hardness H1 [HV0.2] | Sheet thickness t1 [mm] | Butt gap G [mm] | Excess weld metal height h [mm] | tw [mm] | Reduction ratio R [%] | Formula applied | Lower limit [%] | Upper limit [%] | Hardness before pressing Hs [HV0.2] | Hardness after pressing Hw [HV0.2] | Hw-H1 [HV0.2] | Evaluation | | |
| 1 | 3.0 | 0.01 | 220 | 2.0 | 0.10 | 0.4 | 2.4 | 10.0 | (1) | 1.6 | 15.0 | 200 | 230 | 10 | ○ | ○ | Example |
| 2 | 3.0 | 0.01 | 220 | 2.0 | 0.10 | 0.4 | 2.4 | 1.0 | (1) | 1.6 | 15.0 | 200 | 210 | -10 | × | × | Comparative Example |
| 3 | 3.0 | 0.01 | 220 | 2.0 | 0.40 | 0.4 | 2.4 | 15.0 | (2) | 1.8 | 19.8 | 185 | 240 | 20 | ○ | ○ | Example |
| 4 | 3.0 | 0.01 | 220 | 2.0 | 0.40 | 0.4 | 2.4 | 0.0 | (2) | 1.8 | 19.8 | 185 | 185 | -35 | × | × | Comparative Example |
| 5 | 3.0 | 0.01 | 220 | 2.0 | 0.60 | 0.4 | 2.4 | 15.0 | (3) | 2.0 | 20.6 | 180 | 230 | 10 | ○ | ○ | Example |
| 6 | 3.0 | 0.01 | 220 | 2.0 | 0.60 | 0.4 | 2.4 | 25.0 | (3) | 2.0 | 20.6 | 180 | 330 | 110 | × | × | Comparative Example |
| 7 | 3.0 | 0.01 | 220 | 2.0 | 0.15 | 0.4 | 2.4 | 3.0 | (1) | 1.7 | 16.3 | 195 | 220 | 0 | ○ | ○ | Example |
| 8 | 3.0 | 0.01 | 220 | 2.0 | 0.15 | 0.4 | 2.4 | 17.0 | (1) | 1.7 | 16.3 | 195 | 330 | 110 | × | × | Comparative Example |
| 9 | 2.5 | 0.01 | 200 | 1.8 | 0.25 | 0.3 | 2.1 | 3.0 | (2) | 2.1 | 24.6 | 185 | 205 | 5 | ○ | ○ | Example |
| 10 | 2.5 | 0.01 | 200 | 1.8 | 0.25 | 0.3 | 2.1 | 12.0 | (2) | 2.1 | 24.6 | 185 | 290 | 90 | ○ | ○ | Example |
| 11 | 3.5 | 0.01 | 230 | 2.6 | 0.60 | 1.0 | 3.6 | 10.0 | (6) | 0.8 | 21.7 | 175 | 250 | 20 | ○ | ○ | Example |
| 12 | 3.5 | 0.01 | 230 | 2.6 | 0.60 | 0.6 | 3.2 | 5.0 | (6) | 1.3 | 22.1 | 175 | 230 | 0 | ○ | ○ | Example |
| 13 | 4.5 | 0.01 | 235 | 2.6 | 0.30 | 0.4 | 3.0 | 7.0 | (2) | 1.6 | 18.9 | 195 | 235 | 0 | ○ | ○ | Example |
| 14 | 3.0 | 0.01 | 220 | 2.0 | 0.30 | 0.4 | 2.4 | 7.0 | (2) | 1.6 | 18.9 | 185 | 225 | 5 | ○ | ○ | Example |
| 15 | 3.0 | 0.01 | 220 | 5.0 | 0.30 | 0.4 | 5.4 | 7.0 | (2) | 1.6 | 18.9 | 185 | 225 | 5 | ○ | ○ | Example |
| 16 | 3.5 | 0.01 | 230 | 1.6 | 0.30 | 0.4 | 2.0 | 18.0 | (2) | 1.6 | 18.9 | 185 | 288 | 58 | ○ | ○ | Example |
| 17 | 3.5 | 0.01 | 230 | 2.6 | 0.15 | 0.4 | 3.0 | 15.0 | (1) | 1.7 | 16.3 | 195 | 281 | 51 | ○ | ○ | Example |
| 18 | 3.5 | 0.01 | 230 | 2.2 | 0.80 | 0.4 | 2.6 | 20.0 | (3) | 2.3 | 21.3 | 175 | 289 | 59 | ○ | ○ | Example |
| 19 | 2.0 | 0.01 | 200 | 3.0 | 0.30 | 0.4 | 3.4 | 3.0 | (2) | 1.6 | 18.9 | 185 | 202 | 2 | ○ | ○ | Example |
| 20 | 2.0 | 0.01 | 200 | 1.8 | 0.80 | 0.4 | 2.2 | 4.5 | (3) | 2.3 | 21.3 | 175 | 201 | 1 | ○ | ○ | Example |

EP 4 732 986 A1

9

(continued)

| Test No. | Steel sheet | | | | Butt welding conditions | | | | | | | Evaluation of hardness of welded portion | | | | | Remarks |
|---|---|---|---|---|---|---|---|---|---|---|---|---|---|---|---|---|---|
| | Si content [mass%] | C content [mass%] | Hardness H1 [HV0.2] | Sheet thickness t1 [mm] | Butt gap G [mm] | Excess weld metal height h [mm] | tw [mm] | Reduction ratio R [%] | Formula applied | Lower limit [%] | Upper limit [%] | Hardness before pressing Hs [HV0.2] | Hardness after pressing Hw [HV0.2] | Hw-H1 [HV0.2] | Evaluation | Sheet passage test | |
| 21 | 3.5 | 0.01 | 230 | 2.2 | 0.15 | 0.6 | 2.8 | 20.0 | (4) | 1.1 | 21.3 | 190 | 304 | 74 | ○ | ○ | Example |
| 22 | 2.5 | 0.01 | 210 | 2.4 | 0.15 | 0.6 | 3.0 | 4.0 | (4) | 1.1 | 21.3 | 190 | 213 | 3 | ○ | ○ | Example |
| 23 | 2.0 | 0.01 | 200 | 1.8 | 0.80 | 0.6 | 2.4 | 4.5 | (6) | 1.5 | 22.2 | 175 | 201 | 1 | ○ | ○ | Example |
| 24 | 3.5 | 0.01 | 230 | 2.0 | 0.80 | 0.6 | 2.6 | 21.0 | (6) | 1.5 | 22.2 | 175 | 295 | 65 | ○ | ○ | Example |
| 25 | 3.5 | 0.01 | 230 | 1.6 | 0.30 | 0.4 | 2.0 | 26.0 | (2) | 1.6 | 18.9 | 185 | 333 | 103 | × | × | Comparative Example |
| 26 | 3.5 | 0.01 | 230 | 2.6 | 0.80 | 0.4 | 3 | 28.0 | (3) | 2.3 | 21.3 | 175 | 335 | 105 | × | × | Comparative Example |
| 27 | 3.5 | 0.01 | 230 | 2.2 | 0.80 | 0.4 | 2.6 | 1.5 | (3) | 2.3 | 21.3 | 175 | 184 | -46 | × | × | Comparative Example |
| 28 | 3.5 | 0.01 | 230 | 3.0 | 0.15 | 0.6 | 3.6 | 25.0 | (4) | 1.1 | 21.3 | 190 | 333 | 103 | × | × | Comparative Example |
| 29 | 3.5 | 0.01 | 230 | 1.8 | 0.15 | 0.6 | 2.4 | 1.0 | (4) | 1.1 | 21.3 | 190 | 196 | -34 | × | × | Comparative Example |
| 30 | 3.5 | 0.01 | 230 | 2.6 | 0.80 | 0.6 | 3.2 | 28.0 | (6) | 1.5 | 22.2 | 175 | 335 | 105 | × | × | Comparative Example |

| Test No. | Steel sheet | | | | Butt welding conditions | | | | | | | Evaluation of hardness of welded portion | | | | Sheet passage test | Remarks |
|---|---|---|---|---|---|---|---|---|---|---|---|---|---|---|---|---|---|
| | Si content [mass%] | C content [mass%] | Hardness H1 [HV0.2] | Sheet thickness t1 [mm] | Butt gap G [mm] | Excess weld metal height h [mm] | tw [mm] | Reduction ratio R [%] | Formula applied | Lower limit [%] | Upper limit [%] | Hardness before pressing Hs [HV0.2] | Hardness after pressing Hw [HV0.2] | Hw-H1 [HV0.2] | Evaluation | | |
| 31 | 3.5 | 0.01 | 230 | 2.2 | 0.80 | 0.6 | 2.8 | 1.2 | (6) | 1.5 | 22.2 | 175 | 182 | -48 | × | × | Comparative Example |

In the case of excess weld metal height: 0 < h ≤ 0.4 mm, when 0 ≤ G < 0.20, (0.05G + 0.06)/(0.1h) ≤ R < (1.0G + 0.5)/(0.1h) (1) when 0.20 ≤ G < 0.50, (0.1G + 0.1)/(0.2h) ≤ R < (0.7G + 1.3)/(0.2h) (2) when 0.50 ≤ G, (0.2G + 0.2)/(0.4h) ≤ R < (0.5G + 3.0)/(0.4h) (3) In the case of excess weld metal height: h > 0.4 mm, when 0 ≤ G < 0.20, (0.05G + 0.06)/(0.1h) ≤ R < (40G + 220)/(10 + h) (4) when 0.20 ≤ G < 0.50, (0.1G + 0.1)/(0.2h) ≤ R < (20G + 330)/(15 + h) (5) when 0.50 ≤ G, (0.2G + 0.2)/(0.4h) ≤ R < (10G + 450)/(20 + h) (6)

As can be seen from these results, the butt-welded members with the reduction ratio set to satisfy the conditions according to the present disclosure (Examples) were pass (∘) in all of the evaluations.

REFERENCE SIGNS LIST

1    preceding steel sheet
2    succeeding steel sheet
3    butted portion (butt gap)
4    filler wire
5    laser
6    excess weld metal of weld bead
7    pressing roll

**Claims**

1.   A butt welding method comprising, upon continuously passing a plurality of steel sheets through a processing line, butting a trailing end of a preceding steel sheet and a leading end of a succeeding steel sheet at an entry side of the processing line, then irradiating a butted portion with a laser while supplying a filler wire to the butted portion so as to weld the steel sheets by melting and solidifying the filler wire, and pressing a solidified welded portion,

   wherein an excess weld metal height h in mm of the welded portion formed by the irradiation with the laser satisfies $h > 0$, and
   a reduction ratio during the pressing is controlled to satisfy a relationship of $0 \leq H_w - H_1 < 100$, where $H_w$ is hardness of the welded portion after the pressing and $H_1$ is base metal hardness of a steel sheet having lower hardness among the butted steel sheets.

2.   The butt welding method according to claim 1, wherein the reduction ratio during the pressing, denoted as R in %, satisfies any of the following formulas (1) to (6) depending on a butt gap G in mm of the butted portion and the excess weld metal height h in mm:

   in the case where the excess weld metal height h satisfies $0 < h \leq 0.4$ mm,
   when

$$0 \leq G < 0.20,$$

$$(0.05G + 0.06)/(0.1h) \leq R < (1.0G + 0.5)/(0.1h) \qquad (1)$$

   when

$$0.20 \leq G < 0.50,$$

$$(0.1G + 0.1)/(0.2h) \leq R < (0.7G + 1.3)/(0.2h) \qquad (2)$$

   when

$$0.50 \leq G,$$

$$(0.2G + 0.2)/(0.4h) \leq R < (0.5G + 3.0)/(0.4h) \qquad (3); \text{ and}$$

   in the case where the excess weld metal height h satisfies $h > 0.4$ mm,
   when

$$0 \leq G < 0.20,$$

$$(0.05G + 0.06)/(0.1h) \leq R < (40G + 220)/(10 + h) \qquad (4)$$

when

$$0.20 \leq G < 0.50,$$

$$(0.1G + 0.1)/(0.2h) \leq R < (20G + 330)/(15 + h) \qquad (5)$$

when

$$0.50 \leq G,$$

$$(0.2G + 0.2)/(0.4h) \leq R < (10G + 450)/(20 + h) \qquad (6).$$

3. The butt welding method according to claim 1 or 2, wherein one or both of a ferritic filler wire and an austenitic filler wire are used as the filler wire.

## FIG. 1

Welding direction

Rolling direction

## FIG. 2

Succeeding steel sheet

Preceding steel sheet

# FIG. 3

## INTERNATIONAL SEARCH REPORT

| International application No. |
| --- |
| **PCT/JP2024/033591** |

| | |
| --- | --- |
| **A.** | **CLASSIFICATION OF SUBJECT MATTER** |
| | ***B23K 26/21***(2014.01)i; ***B23K 26/342***(2014.01)i<br>FI:   B23K26/21 F; B23K26/21 W; B23K26/342 |

According to International Patent Classification (IPC) or to both national classification and IPC

| | |
| --- | --- |
| **B.** | **FIELDS SEARCHED** |

Minimum documentation searched (classification system followed by classification symbols)

B23K26/21; B23K26/342

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2013-27934 A (NIPPON STEEL & SUMITOMO METAL CORPORATION) 07 February 2013 (2013-02-07)<br>    paragraphs [0063]-[0064], [0071]-[0078], fig. 9 | 1 |
| Y | | 3 |
| A | | 2 |
| Y | JP 7215649 B1 (JFE STEEL CORPORATION) 31 January 2023 (2023-01-31)<br>    paragraph [0035] | 3 |
| A | | 1-2 |
| A | JP 2015-30014 A (TADA ELECTRIC CO., LTD.) 16 February 2015 (2015-02-16)<br>    entire text, all drawings | 1-3 |
| A | JP 2013-176809 A (NIPPON STEEL & SUMITOMO METAL CORPORATION) 09 September 2013 (2013-09-09)<br>    entire text, all drawings | 1-3 |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| PCT/JP2024/033591 |

| C. | DOCUMENTS CONSIDERED TO BE RELEVANT | |
|---|---|---|
| Category* | Citation of document, with indication, where appropriate, of the relevant passages | Relevant to claim No. |
| A | JP 2007-175774 A (POSCO) 12 July 2007 (2007-07-12)<br>entire text, all drawings | 1-3 |

Form PCT/ISA/210 (second sheet) (July 2022)

| INTERNATIONAL SEARCH REPORT | | International application No. |
|---|---|---|
| Information on patent family members | | **PCT/JP2024/033591** |

| Patent document cited in search report | | | Publication date (day/month/year) | Patent family member(s) | Publication date (day/month/year) |
|---|---|---|---|---|---|
| JP | 2013-27934 | A | 07 February 2013 | CN          101610872          A<br>p. 17, line 22 to p. 18, line 5,<br>p. 19, line 15 to p. 20, line 18,<br>fig. 9<br>KR  10-2009-0118946          A | |
| JP | 7215649 | B1 | 31 January 2023 | EP          4393632    A1<br>paragraph [0036]<br>CN          117917974          A | |
| JP | 2015-30014 | A | 16 February 2015 | (Family: none) | |
| JP | 2013-176809 | A | 09 September 2013 | (Family: none) | |
| JP | 2007-175774 | A | 12 July 2007 | CN          1990155          A<br>entire text, all drawings | |

Form PCT/ISA/210 (patent family annex) (July 2022)

**EP 4 732 986 A1**

**Patent documents cited in the description**

- JP 4486639 B
- JP 2948843 B